## Europäisches Patentamt
## European Patent Office
## Office européen des brevets

(19)

(11) Veröffentlichungsnummer: **0 196 425**
**B1**

(12) # EUROPÄISCHE PATENTSCHRIFT

(45) Veröffentlichungstag der Patentschrift:
**21.09.88**

(51) Int. Cl.⁴: **B 65 G 53/46**

(21) Anmeldenummer: **86101767.1**

(22) Anmeldetag: **12.02.86**

(54) **Dosierschieber für feinkörnige Feststoffe.**

(30) Priorität: **06.03.85 DE 3507973**

(43) Veröffentlichungstag der Anmeldung:
**08.10.86 Patentblatt 86/41**

(45) Bekanntmachung des Hinweises auf die Patenterteilung:
**21.09.88 Patentblatt 88/38**

(84) Benannte Vertragsstaaten:
**AT DE FR GB IT**

(56) Entgegenhaltungen:
**EP-A-0 106 319**
**DE-A-3 145 781**
**FR-A-2 476 261**

(73) Patentinhaber: **Klöckner CRA Technologie GmbH,
Klöcknerstrasse 29, D-4100 Duisburg 1 (DE)**

(72) Erfinder: **Fassbinder, Hans- Georg, Dr. rer.nat.,
Am Annaschacht 32, D-8458 Sulzbach- Rosenberg
(DE)**

(74) Vertreter: **Kador & Partner, Corneliusstrasse 15,
D-8000 München 5 (DE)**

EP 0 196 425 B1

LIBER, STOCKHOLM 1988

## Beschreibung

Die Erfindung bezieht sich auf einen Dosierschieber für feinkörnige Feststoffe zum gasdichten Verschließen und querschnittsveränderlichen Öffnen von Gefäßen und Rohrleitungen in pneumatischen Fördersystemen, wobei in einem druckfesten Schiebergehäuse die mit einer Dosieröffnung versehene Schieberplatte durch einen entsprechenden Antrieb zwischen zwei Gleitringen bewegt wird. Dosierschieber dieser Art sind bekannt.

Zahlreiche feinkörnige Feststoffe, wie beispielsweise Zement, Metall- und Keramikpulver, Kunstdünger, Stäube, z.B. Rücklauf von Gasreinigungsanlagen und Schlackenbildner für metallurgische Verfahren, werden pneumatisch gefördert und dosiert. Das feinkörnige Gut befindet sich häufig in Silos, aus denen es in unterschiedlichen Mengen und mit variierenden Strömungsgeschwindigkeiten abgezogen wird.

Es sind verschiedene Regelungsmöglichkeiten für derartige Gutströme bekannt. Zum Beispiel ist es möglich, mit einem konstanten Auslaßquerschnitt am Lagerbehälter zu arbeiten und die Mengenregulierung durch unterschiedliche Druckdifferenzen zwischen dem Vorratsbehälter und dem Raum, in dem das feinkörnige Gut strömt, zu bewirken. Diese Mengenregulierung weist allerdings Nachteile hinsichtlich der praktisch einstellbaren Druckdifferenzen und der gewissen Trägheit in diesem System auf. Weiterhin sind besondere Sicherheitsmaßnahmen mit steigendem Innendruck der Behälter erforderlich.

Es ist auch bekannt, an den Lagerbunkern der pulverförmigen Materialien Dosierventile zur Steuerung der Austragsmengen zu verwenden, die mit einem variablen Öffnungsquerschnitt arbeiten. Diese Art der Regelung arbeitet weitgehend verzögerungsfrei und benötigt keine hohen Druckdifferenzen zwischen den Ein- und Austragsgefäßen. Allerdings unterliegen die Dosieröffnungen, in Abhängigkeit von der Härte des zu fördernden Materials, einem erhöhten Verschleiß. Verschleißbeständige Werkstoffe, beispielsweise Hartmetall und Keramik, erlauben hingegen kein gasdichtes Schließen der Austragsöffnung, wie es sich jedoch bei den meisten Anwendungsfällen für erforderlich erweist.

Das deutsche Patent 23 10 358 bezieht sich auf eine vorteilhafte Lösung, bei der, miteinander gekoppelt, in Strömungsrichtung nacheinander ein Dosierkörper und ein Dichtorgan angeordnet sind. Die Abdichtung erfolgt in diesem Fall bei einem, gegenüber dem Dosierkörper erweiterten Querschnitt, mit bekannten, elastischen Dichtmitteln. Nachteilig wirken sich bei dieser patentierten Vorrichtung die aufwendigere Konstruktion und der größere Raumbedarf aus.

Der Erfindung liegt nun die Aufgabe zugrunde, eine raumsparende Vorrichtung zu schaffen, die es erlaubt, die Gutströme aus feinkörnigen Feststoffen mit gleichen oder variierenden Durchflußraten schnell und mit hoher Genauigkeit zu steuern, und auch gleichzeitig das gasdichte Verschließen der Vorratssilos gegenüber den nachgeschalteten Zugaberäumen für die pulverisierten Stoffe gewährleistet.

Die Lösung dieser Aufgabe basiert auf der Erkenntnis, in einem druckfesten Schiebergehäuse die mit einer Dosieröffnung versehene Schieberplatte durch einen Antrieb zwischen zwei Gleitringen zu bewegen und erfindungsgemäß so zu gestalten, daß die vorzugsweise kreisförmige Öffnung des einlaufseitigen Gleitringes eine festgelegte Nennweite aufweist, die zwischen 1/10 bis 1/3 des Gleitringaußendurchmessers beträgt, der auslaufseitige Gleitring einen Innendurchmesser hat, der dem 3- bis 10-fachen der Einlaufnennwelte entspricht, und daß das Schiebergehäuse mit einem Schmierstoff gefüllt ist, der unter einem gleichen oder höheren Druck steht wie der Betriebsdruck des pneumatischen Fördersystems, in dem der erfindungsgemäße Dosierschieber montiert ist.

Der Dosierschieber gemäß der Erfindung erlaubt durch seine einfache funktionelle Bauweise eine raumsparende Konstruktion, die sich durch Zuverlässigkeit und lange Lebensdauer auszeichnet.

Häufig wird die erfindungsgemäße Vorrichtung mit einer Schieberplatte gebaut, die sich zwischen den beiden Gleitringen hin- und herbewegt. Es haben sich aber auch Konstruktionen mit drehender Schieberplatte bewährt. Normalerweise befindet sich bei dieser Lösung der Drehpunkt der Schieberplatte außerhalb der Gleitringe, und der Rotationsantrieb bewegt die Dosieröffnung exzentrisch zwischen den beiden Gleitringen.

Bei der erfindungsgemäßen Vorrichtung sind normalerweise beide Gleitringe und die Schieberplatte aus verschleißfestem, hartem Material gefertigt. Als verschleißfeste Werkstoffe kommen, je nach Beanspruchung, d.h. Härte der zu fördernden feinkörnigen Feststoffe, gehärtete Metalle, Stahl, Edelstahl, Legierungen, wie Titanstahl, Hartmetalle, Sinterkeramik, Keramik, wie Schmelzkorund, Mullit, Siliziumkarbid, Porzellan und Cermets in Betracht. Es können die Gleitringe und die Schieberplatte auch aus verschiedenen Materialien aufgebaut sein. Beispielsweise können verschleißfeste Hülsen oder Auftragsschweißungen angewendet werden.

Die hermetische Abdichtung des erfindungsgemäßen Dosierschiebers im geschlossenen Zustand konnte überraschenderweise auch bei starker Beanspruchung über sehr lange Einsatzzeiten betriebssicher mit relativ einfachen Mitteln erreicht werden. Es sind die vier Gleitflächen, d.h. die der Schieberplatte zugewandten Flächen der Gleitringe, und die Schieberplatte selbst mit einem Planschliff versehen, und erfindungsgemäß wird das Schiebergehäuse mit einem Schmierstoff gefüllt, den man von außen unter einen höheren oder mindestens gleichen Druck setzt, der in dem pneumatischen Fördersystem herrscht, in dem dieser Dosierschieber montiert ist. Als Schmierstoffe haben sich handelsübliche Öle unterschiedlicher Viskosität und übliche Schmierfette bewährt.

Es liegt im Sinne der Erfindung, daß diese unter Druck stehenden Schmiermittel die Dichtspalte zwischen der Schieberplatte und den Gleitringen ausfüllen und damit abdichten und darüber hinaus einen verschleißfreien und leichtgängigen Bewegungsablauf der Schieberplatte bewirken. Weiterhin können die unter Druck gesetzten Schmiermittel für die nötige Anpreßkraft der Gleitringe auf der Schieberplatte sorgen.

Die Vorrichtung gemäß der Erfindung kann als Stellglied in einem Durchflußregelkreis eingesetzt werden. Für diesen Anwendungsfall ist der Dosierschieber besonders geeignet, da die Bewegung der Schieberplatte verschleißfrei erfolgt und somit häufige Verstellbewegungen ohne Nachteile für die Betriebssicherheit zuläßt.

Anhand der beigefügten Zeichnungen sind anschließend zwei Ausführungsbeispiele des erfindungsgemäßen Dosierschiebers beschrieben. Es zeigen

Figur 1 einen schematisierten Vertikalschnitt durch die Vorrichtung mit einer hin- und herbeweglichen Schieberplatte, und

Figur 2 den schematisierten Horizontalschnitt durch eine andere Ausführungsform der Vorrichtung mit einer exzentrisch rotierenden Schieberplatte.

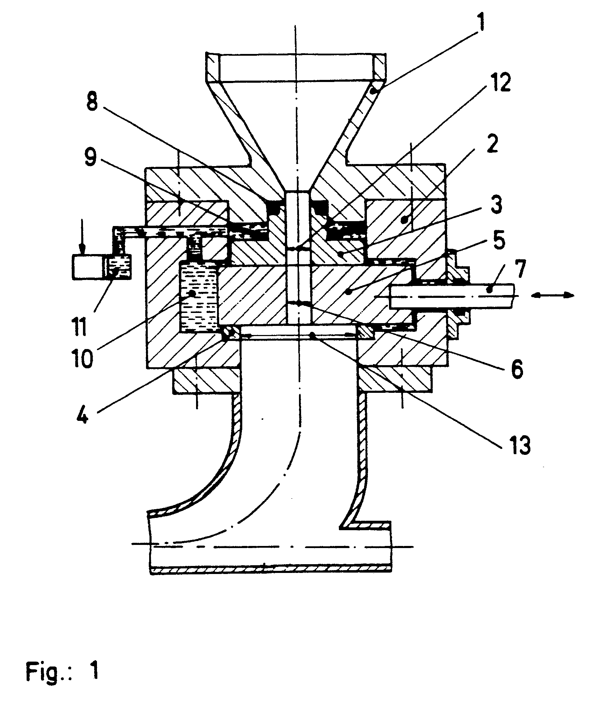

Gemäß Figur 1 gelangen durch den Einlauftrichter 1 die körnigen Feststoffe in den Dosierschieber. Dieser besteht aus dem druckfesten Gehäuse 2, in dem der Gleitring 3 an der Einlaufseite und 4 an der Auslaufseite angeordnet sind. Zwischen diesen beiden Gleitringen bewegt sich die Schieberplatte 5 mit der Dosieröffnung 6 und dem extern angeordneten, nicht dargestellten Antrieb, der die Schieberplatte 5 über die Schubstange 7 bewegt. Der Einlaufgleitring 3 ist gegenüber dem Gehäuse 2 durch den O-Ring 8 abgedichtet und mit der Tellerfeder 9 vorgespannt. Die Ölfüllung 10, die über den pneumatischen Druckübersetzer 11 auf dem gewünschten Betriebsdruck gehalten wird, wirkt zusätzlich auf den Gleitring 3 und drückt diesen gegen die Schieberplatte 5. Die Gleitflächen zwischen den Gleitringen 3 und 4 und der Schieberplatte 5 werden durch das Öl 10 geschmiert und gedichtet. Die Stellung der Dosieröffnung 6 der Schieberplatte 5 gegenüber der einlaufseitigen Gleitringöffnung 12 ergibt den freien Durchflußquerschnitt, mit dem die Durchflußmenge der feinkörnigen Feststoffe geregelt wird. In Figur 1 ist der Dosierschieber mit dem größten Durchflußquerschnitt, d.h. ganz geöffneter Schieberplatte, dargestellt. Der Innendurchmesser 13 des auslaufseitigen Gleitringes 4 entspricht der 4-fachen Nennweite 12 des Einlaufgleitringes 3.

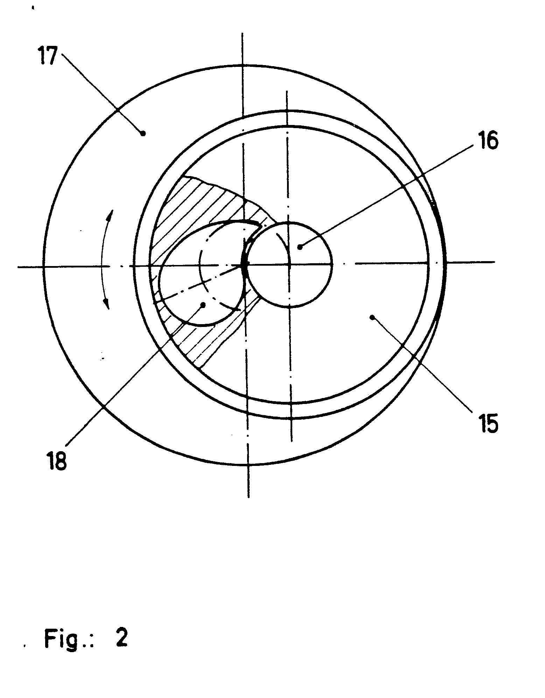

Die Figur 2 zeigt einen Drehschieber mit rotierender Schieberplatte. Der Einlaufgleitring 15 verfügt über die kreisförmige Öffnung 16, und bei drehender Schieberplatte 17 gibt die Dosieröffnung 16 der Schieberplatte 17 den Durchströmquerschnitt frei. Durch die besondere Gestaltung der Dosieröffnung 18 in der Schieberplatte 17 erreicht man eine Dosiercharakteristik, die nach dem Öffnen zunächst sehr geringe, dafür aber genau einstellbare Gutströme zuläßt.

Durch besondere Ausgestaltung des erfindungsgemäßen Dosierschiebers, beispielsweise hinsichtlich der Dosiercharakteristik durch Formgebung der Dosieröffnung und geeigneter Wahl der Querschnitte, kann dieser an die betrieblichen Bedingungen angepaßt werden. Geeignete Werkstoffe in Relation zur Härte der durchströmenden pulverförmigen Materialien können ausgewählt werden.

## Patentansprüche

1. Dosierschieber für feinkörnige Feststoffe zum gasdichten Verschließen und querschnittsveränderlichen Öffnen von Gefäßen und Rohrleitungen in pneumatischen Fördersystemen, wobei in einem druckfesten Schiebergehäuse die mit einer Dosieröffnung versehene Schieberplatte durch einen Antrieb zwischen zwei Gleitringen bewegt wird, dadurch gekennzeichnet, daß die vorzugsweise kreisförmige Öffnung des einlaufseitigen Gleitringes eine festgelegte Nennweite aufweist, die zwischen 1/10 bis 1/3 des Gleitringaußendurchmessers beträgt, der auslaufseitige Gleitring einen Innendurchmesser hat, der dem 3- bis 10-fachen der Einlaufnennweite entspricht, und das Schiebergehäuse mit einem Schmierstoff gefüllt ist, der unter einem gleichen oder höheren Druck steht wie der Betriebsdruck des pneumatischen Fördersystems.

2. Dosierschieber nach Anspruch 1, dadurch gekennzeichnet, daß die Schieberplatte durch einen Antrieb hin- und herbewegt wird.

3. Dosierschieber nach Anspruch 1, dadurch gekennzeichnet, daß die Schieberplatte exzentrisch zu den Gleitringen gelagert ist und durch den Antrieb rotierend bewegt wird.

4. Dosierschieber nach einem oder mehreren der Ansprüche 1 bis 3, dadurch gekennzeichnet, daß die Gleitringe und die Schieberplatte aus verschleißfesten Werkstoffen, wie beispielsweise gehärtete Metalle, Edelstahl, Hartmetall, Sinterkeramik, Keramik und/oder Cermets, gefertigt sind.

5. Dosierschieber nach einem oder mehreren der Ansprüche 1 bis 4, dadurch gekennzeichnet, daß die Dosieröffnung in der Schieberplatte beliebige Querschnittsformen zur Anpassung der Dosiercharakteristik aufweist.

6. Dosierschieber nach einem oder mehreren der Ansprüche 1 bis 5, dadurch gekennzeichnet, daß der Schmierstoffdruck im Schiebergehäuse automatisch dem Druck im pneumatischen Fördersystem, beispielsweise durch einen hydraulischen Druckübersetzer, angepaßt wird.

## Claims

1. A metering slide for fine-grained solids for gastight closing and cross-section-variable opening of vessels and piping in pneumatic conveying systems, whereby the sliding plate provided with a metering opening is moved by a drive means between two slide rings in a compression-proof slide casing, characterized in that the preferably circular opening of the slide ring on the intake side has a predetermined nominal width between 1/10 and 1/3 of the outside diameter of the slide ring, the slide ring on the discharge side has an inside diameter corresponding to 3 times to 10 times the nominal width of the intake, and the slide casing is filled with a lubricant which is under pressure equal to or higher than the operating pressure of the pneumatic conveying system.

2. The metering slide according to claim 1, characterized in that the sliding plate is moved back and forth by a drive means.

3. The metering slide according to claim 1, characterized in that the sliding plate is mounted eccentrically to the slide rings and is moved rotatingly by the drive means.

4. The metering slide according to one or more of claims 1 to 3, characterized in that the slide rings and the sliding plate are made of wear resisting materials such as hardened metals, special steel, hard metal, sintered ceramics, ceramics and/or cermets.

5. The metering slide according to one or more of claims 1 to 4, characterized in that the metering opening in the sliding plate has any desired cross-sectional shape to adjust the dosing characteristics.

6. The metering slide according to one or more of claims 1 to 5, characterized in that the lubricant pressure in the slide casing is automatically adapted to the pressure in the pneumatic conveying system, for example by a hydraulic pressure transformer.

## Revendications

1. Vanne de dosage de substances solides pulvérulentes, destinée à obturer de manière étanche aux gaz des récipients et conduites de systèmes de transport pneumatiques, et à les ouvrir selon des sections transversales variables, dans laquelle une plaque de vanne pourvue d'une ouverture de dosage est déplacée à l'intérieur d'un carter de vanne résistant à la pression, entre deux bagues de glissement par un moyen d'actionnement, caractérisée en ce que l'ouverture, de préférence circulaire, de la bague de glissement d'entrée présente une dimension nominale prédéterminée comprise entre 1/10 et 1/3 du diamètre extérieur de la bague de glissement, en ce que la bague de glissement de sortie présente un diamètre intérieur représentant 3 à 10 fois la dimension nominale d'entrée, et en ce que le carter de vanne est rempli d'un lubrifiant soumis à une pression égale ou supérieure à la pression de service du système de transport pneumatique.

2. Vanne de dosage selon la revendication 1, caractérisée en ce que la plaque de vanne est déplaçable en va-et-vient par des moyens d'actionnement ou de commande.

3. Vanne de commande selon la revendication 1, caractérisée en ce que la plaque de vanne est montée excentriquement par rapport aux bagues de glissement et est entraînée en rotation par le moyen d'actionnement.

4. Vanne de dosage selon une au moins des revendications 1 à 3, caractérisée en ce que les bagues de glissement et la plaque de vanne sont formées de matériaux résistant à l'usure, tels que des métaux trempés, de l'acier allié, du carbure, du matériau céramique fritté, du matériau céramique et/ou des "Cermets".

5. Vanne de dosage selon une au moins des revendications 1 à 4, caractérisée en ce que l'ouverture de dosage ménagée dans la plaque de vanne présente des configurations différentes en vue de l'adaptation de la caractéristique de dosage.

6. Vanne de dosage selon une au moins des revendications 1 à 5, caractérisée en ce que la pression du lubrifiant dans le carter de vanne est adaptée automatiquement à la pression régnant dans le système de transport pneumatique, par exemple à l'aide d'un convertisseur de pression oléo-pneumatique.

Fig.: 1

Fig.: 2